# EUROPEAN PATENT APPLICATION

(11) **EP 4 718 218 A1**
(43) Date of publication of application: **01.04.2026**
(21) Application number: 25204607.3
(22) Date of filing: 25.09.2025
(51) Int. Cl.: G06F 3/01, G02B 27/01

(54) **STATE-BASED OPERATION OF ELECTRONIC DEVICES**

(30) Priority: 26.09.2024 US 202463699755 P
(71) Applicant: Apple Inc., Cupertino, CA 95014 (US)
(72) Inventor: SALTER, Thomas G., Cupertino, 95014 (US); SMITH, Sam D., Cupertino, 95014 (US); CHALMERS, Devin W., Cupertino, 95014 (US); HODGES, Aaron, Cupertino, 95014 (US); CHIMALAMARRI, Anshu K., Sunnyvale, 94086 (US); GUGLIELMONE JR., Ronald J., Cupertino, 95014 (US); AGARWAL, Sachin, Cupertino, 95014 (US); MESSINGHER LANG, Shai, Cupertino, 95014 (US)
(74) Representative: Rooney, John-Paul

(57) **Abstract**

Devices, systems, and methods for operating a head-mountable device (200). Specifically, the head-mountable device (200) may be operated according to different operating modes depending on a current device state of the head-mountable device (200). The head-mountable devices described here may be configured to operate in a plurality of candidate device states. In a plurality of these candidate device states, the head-mountable device (200) may be worn on a corresponding portion of the user's body (402). As the head-mountable device (200) moves between these different body-mounted states, the head-mountable device may change its current operating mode. In some instances, the plurality of candidate device states may include one or more additional device states, and the head-mountable device (200) may change its current operating mode as it enters these additional device states.

## Description

### CROSS-REFERENCE TO RELATED APPLICATIONS

This application claims the benefit under 35 U.S.C. § 119(e) of U.S. Provisional Patent Application No. 63/699,755, filed September 26, 2024.

### FIELD

The described embodiments relate generally to head-mountable devices, and more specifically, head-mountable devices that may change a current operating mode based on a detected device state.

### BACKGROUND

Head-mountable devices may be worn by a user for a variety of purposes. In some instances, a head-mountable device may be configured to provide information to a user, such as via visual information (e.g., displayed as part of a virtual reality (VR) system, an augmented reality (AR) system, a mixed reality (MR) system, or the like), audio output and/or haptic feedback. A user may, in some instances, be able to interact with the head-mountable device to provide inputs (e.g., tactile inputs, voice commands, or the like), which may be used to control operation of the head-mountable device.

### SUMMARY

Embodiments described herein are directed to systems, devices, and methods for selecting an operating mode of a head-mountable device. Some embodiments are directed to a method of operating a head-mountable device that includes identifying a current device state of the head-mountable device, and selecting, in response to identifying that the current device state is a body-worn state of a plurality of candidate body-worn states, an operating mode corresponding to the body-worn state as a current operating mode. The method further includes operating the head-mountable device according to the current operating mode.

The plurality of candidate body-worn states may include a face-mounted state, and in some variations may include a forehead-mounted state and/or a torso-mounted state. In some instances, identifying the current device state of the head-mountable device includes determining an orientation of the head-mountable device. Additionally or alternatively, identifying the current device state of the head-mountable device may include determining a current device configuration of the head-mountable device.

In some variations, the method may include determining that the current device state of the head-mountable device has changed from the body-worn state to an additional body-worn state of the plurality of candidate body-worn states and changing the current operating mode to a different operating mode corresponding to the additional body-worn state. In other variations, the method may include determining that the current device state of the head-mountable device has changed from the body-worn state, and changing the current operating mode to a transition operating mode. In some of these variations, the current operating mode is changed to the transition operating mode in response to determining that a set of transition criteria has been met. In some of these variations, the set of transition criteria is selected based on the body-worn state.

Other embodiments are directed to a system that includes a head-mountable device. The head-mountable device includes a head-mountable support structure, and one or more processors operatively coupled to a memory. The one or more processors are configured to execute instructions causing the one or more processors to identify a current device state of the head-mountable device and select, in response to identifying that the current device state is a body-worn state of a plurality of candidate body-worn states, an operating mode corresponding to the body-worn state as a current operating mode. The process is further configured to operate the head-mountable device according to the current operating mode.

The head-mountable support structure may include a frame and a set of temples connected to the frame. The plurality of candidate body-worn states may include a face-mounted state, and in some variations may include a forehead-mounted state and/or a torso-mounted state. In some variations, the one or more processors are configured to identify the current device state of the head-mountable device using an orientation of the head-mountable device. Additionally or alternatively, the one or more processors are configured to identify the current device state of the head-mountable device using a current device configuration of the head-mountable device. Additionally or alternatively, the head-mountable device includes an eye tracker, and the one or more processors may be configured to identify the current device state of the head-mountable device using information from the eye tracker.

In some variations the one or more processors are configured to determine that the current device state of the head-mountable device has changed from the body-worn state to an additional body-worn state of the plurality of candidate body-worn states. The one or more processors may be configured to change the current operating mode to a different operating mode corresponding to the additional body-worn state. In other variations, the one or more processors are configured to determine that the current device state of the head-mountable device has changed from the body-worn state and change the current operating mode to a transition operating mode.

Still other variations are directed to a method of operating a head-mountable device that includes identifying a current device state of the head-mountable device and determining that the current device state is a first device state of a plurality of candidate device states, wherein the plurality of candidate device states includes a plurality of candidate body-worn device states. The method further includes selecting a first operating mode as a current operating mode, wherein the first operating mode corresponds to the first device state. The method further includes determining that the current device state has changed from the first device state to a second device state of the plurality of candidate device states and updating the current operating mode to a second operating mode that corresponds to the second device state.

The plurality of candidate body-worn states may include a face-mounted state, and in some variations may include a forehead-mounted state and/or a torso-mounted state. In some variations, the plurality of candidate device states includes a set of additional candidate device states. In some variations, the method includes determining that the current device state has changed from the second device state to a third device state that does not correspond any of the plurality of candidate device states, and updating the current operating mode to a default operating mode. In some instances, identifying the current device state of the head-mountable device includes determining an orientation of the head-mountable device. Additionally or alternatively, identifying the current device state of the head-mountable device may include determining a current device configuration of the head-mountable device.

Yet other embodiments are directed to a system that includes a head-mountable device. The head-mountable device includes a head-mountable support structure, and one or more processors operatively coupled to a memory. The one or more processors are configured to execute instructions causing the one or more processors to identify a current device state of the head-mountable device and determine that the current device state is a first device state of a plurality of candidate device states, wherein the plurality of candidate device states includes a plurality of candidate body-worn device states. The one or more processors are further configured to select a first operating mode as a current operating mode, wherein the first operating mode corresponds to the first device state. The one or more processors are further configured to determine that the current device state has changed from the first device state to a second device state of the plurality of candidate device states and update the current operating mode to a second operating mode that corresponds to the second device state. In some variations, the one or more processors are configured to determine that the current device state has changed from the second device state to a third device state that does not correspond any of the plurality of candidate device states, and update the current operating mode to a default operating mode.

The head-mountable support structure may include a frame and a set of temples connected to the frame. The plurality of candidate body-worn states may include a face-mounted state, and in some variations may include a forehead-mounted state and/or a torso-mounted state. In some variations, the plurality of candidate device states includes a set of additional candidate device states. In some variations, the one or more processors are configured to identify the current device state of the head-mountable device using an orientation of the head-mountable device. Additionally or alternatively, the one or more processors are configured to identify the current device state of the head-mountable device using a current device configuration of the head-mountable device. Additionally or alternatively, the head-mountable device includes an eye tracker, and the one or more processors may be configured to identify the current device state of the head-mountable device using information from the eye tracker.

In addition to the example aspects and embodiments described above, further aspects and embodiments will become apparent by reference to the drawings and by study of the following description.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 shows a schematic diagram of example components of a head-mountable device as described herein.
FIG. 2A depicts a front view and FIGS. 2B and 2C depict top views, respectively, of a variation of a head-mountable device as described herein.
FIG. 3 shows a schematic diagram of a variation of a system that includes a head-mountable device as described herein.
FIGS. 4A-4C depict different scenes in which a head-mountable device is worn in different body-mounted states.
FIGS. 5A-5C depict example processes by which a head-mountable device may set a current operating mode of the head-mountable device.

It should be understood that the proportions and dimensions (either relative or absolute) of the various features and elements (and collections and groupings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

### DETAILED DESCRIPTION

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents as can be included within the spirit and scope of the described embodiments as defined by the appended claims.

Embodiments disclosed herein are directed to devices, systems, and methods for operating a head-mountable device. Specifically, the head-mountable device may be operated according to different operating modes depending on a current device state of the head-mountable device. The head-mountable devices described here may be configured to operate in a plurality of candidate device states. In a plurality of these candidate device states, the head-mountable device may be worn on a corresponding portion of the user's body. As the head-mountable device moves between these different body-mounted state, the head-mountable device may change its current operating mode. In some instances, the plurality of candidate device states may include one or more additional device states, and the head-mountable device may change its current operating mode as it enters these additional device states.

As used herein, a "device state" refers to a contextual state of the head-mountable device that satisfies a corresponding set of criteria, where the contextual state indicates a current location of the head-mountable device relative to a user and/or the surrounding environment. A "body-mounted" device state refers to a device state in which a head-mountable device is worn in a particular manner by a user. Additional device states may indicate that a head-mountable device has been placed in a particular location (e.g., positioned on a surface of a desk), is physically engaging a particular accessory device (e.g., is placed in a carrying case and/or connected to a charging device), combinations thereof, or the like.

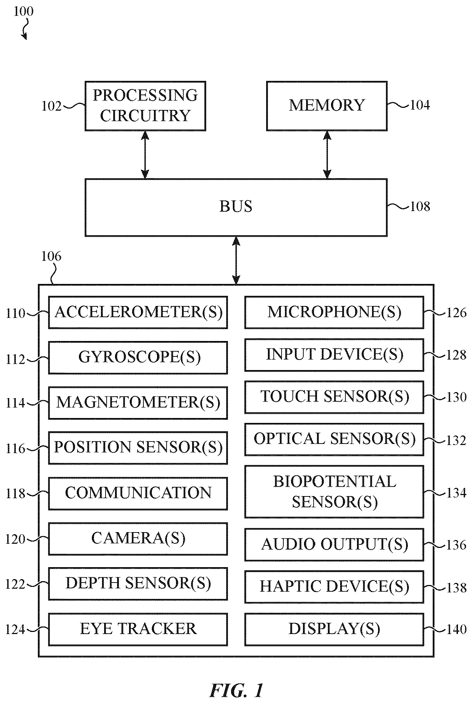

These and other embodiments are discussed below with reference to FIGS. 1-5C. However, those skilled in the art will readily appreciate that the detailed description given herein with respect to these figures is for explanatory purposes only and should not be construed as limiting.

Generally, the head-mountable device described herein are configured as an electronic device that is configured to be worn in multiple positions on a user's body, including being worn on the user's head. The head-mountable device may include a variety of components that may facilitate operation of the head-mountable device. FIG. 1 depicts a block diagram of an example head-mountable device 100 as described herein. The head-mountable device 100 includes control circuitry that is configured to control operation of the head-mountable device 100. Specifically, the control circuitry may include processing circuitry 102, memory 104, and an I/O section 106. The I/O section 106 includes various system components that may assist with the operation of the head-mountable device 100, as will be described in more detail herein. The head-mountable device 100 may include a bus 108 that operatively couple the I/O section 106 with the processing circuitry 102 and memory 104, which may allow for the processing circuitry 102 and memory 104 to control operation of the various components of the I/O section 106. Additionally, the bus 108 may interconnect different components within the I/O section 106, which may allow for communication between these components.

The processing circuitry 102 may include one or more computer processors, each of which can include, for example, a processor, a microprocessor, a programmable logic array (PLA), a programmable array logic (PAL), a generic array logic (GAL), a complex programmable logic device (CPLD), an application-specific integrated circuit (ASIC), a field-programmable gate array (FPGA), or any other programmable logic device (PLD) configurable to execute an operating system and applications of the head-mountable device 100, as well as to facilitate the various processes described herein.

The memory 104 of the head-mountable device 100 can include storage, such as a computer-readable storage device. A computer-readable storage device can be any medium that can tangibly contain or store computer-executable instructions for use the by processing circuitry 102 of the head-mountable device 100. In some examples, the storage device is a transitory computer-readable storage medium. In some examples, the storage device is a non-transitory computer-readable storage medium. The non-transitory computer-readable storage device can include, but is not limited to, magnetic, optical, and/or semiconductor storages, such as magnetic disks, optical discs based on CD, DVD, or Blu-ray technologies, as well as persistent solid-state memory such as flash, solid-state drives, and the like.

The memory 104 may include one or more non-transitory computer-readable storage devices that are used to store computer-executable instructions, which, when executed by the processing circuitry 102, can cause the processing circuitry 102 to control operation of the head-mountable device 100. For example, a non-transitory computer-readable storage devices may store computer-executable instructions that are run on the processing circuitry 102 (e.g., via one or more processors) to perform the processes that are described herein. Additionally, non-transitory computer-readable storage devices may be used to store information generated or received by the head-mountable device 100 during operation of the head-mountable device 100 (e.g., images or image information captured by the head-mountable device 100, results of physiological measurements performed by the head-mountable device 100, or the like).

Accordingly, any of the processes described herein may be stored as instructions on a non-transitory computer-readable storage device, such that one or more processors may utilize these instructions to perform the various operations of the processes described herein. Similarly, the devices described herein include a memory (e.g., memory 104) and one or more processors (e.g., processing circuitry 102) operatively coupled to the memory. The one or more processors may receive instructions from the memory and are configured to execute these instructions to perform the various blocks of the processes described herein. Any of the processes described herein may be performed, using the systems and devices described herein, as a method of selecting and/or changing a current operating mode of the head-mountable device 100.

The I/O section 106 may include a variety of components that are used to facilitate operation of the head-mountable device 100. FIG. 1 shows illustrative set of components that may be included in the I/O section 106. It should be appreciated that the components depicted in the I/O section 106 of FIG. 1 is not intended to be an exhaustive list (e.g., the head-mountable device 100 may include additional components not depicted in FIG. 1), nor does the head-mountable device 100 need to include all of components depicted in FIG. 1 (e.g., the head-mountable device 100 may include a subset of the components of the I/O section 106 depicted in FIG. 1).

In some variations, the head-mountable device 100 may include one or more sensors that are configured to detect movement of the head-mountable device 100 and/or determine an orientation of the head-mountable device 100. For example, the head-mountable device 100 may include one or more accelerometers 110, one or more gyroscopes 112, and/or one or more magnetometers 114. In some variations, the head-mountable device 100 may be configured to detect movement (e.g., translational movement and/or rotational movement) of the head-mountable device 100. The head-mountable device 100 may use information from some or all of these sensors to detect and characterize motion of the head-mountable device 100. Movement of the head-mountable device 100 may be indicative of movement of a user (e.g., as the head-mountable device 100 moves with the user, such as when the head-mountable device 100 is in a body-worn state), may be indicative of relative movement between the head-mountable device 100 and the user, and/or may be indicative of relative movement between the head-mountable device 100 and its surrounding environment. Accordingly, the head-mountable device 100 may use this motion information to determine a current device state of the head-mountable device 100, such as described in more detail herein.

Similarly, the head-mountable device 100 may be configured to determine an orientation of the head-mountable device 100. For example, the head-mountable device 100 may use information from some or all of these sensors to determine an orientation of the head-mountable device 100. The head-mountable device 100 may use this orientation information to determine a current device state of the head-mountable device 100, such as described in more detail herein. In some variations, the head-mountable device 100 may include an inertial measurement unit that may include one or more of the sensors (e.g., accelerometers, gyroscopes, and/or magnetometers) and is configured to generate motion information and/or orientation information of the head-mountable device 100.

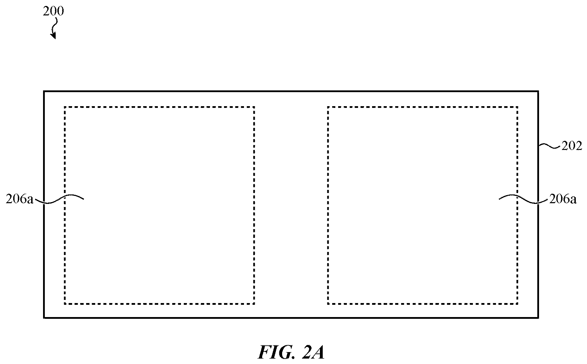

In some variations, such as described in more detail with respect to the head-mountable device 200 of FIGS. 2A-2D, the head-mountable device 100 may include support structures that are moveable relative to each other. In these instances, the head-mountable device 100 may be moved between different device configurations, each of which corresponds to a different spatial configuration of its support structures. In some of these variations, the head-mountable device 100 may be configured to determine a current device configuration of the head-mountable device 100. For example, the head-mountable device 100 may select the current device configuration from a plurality of candidate device configurations, such as described in more detail herein.

Accordingly, in some variations the head-mountable device 100 may be configured to detect the relative position and/or movement of two or more support structures, and the head-mountable device 100 may use this information in determining the current device configuration of the head-mountable device 100. For example, the head-mountable device 100 may include one or more position sensors 116, each of which is configured to detect a relative position or orientation between two components of the head-mountable device 100. Each position sensor 116 may be any type of sensor that is capable of measuring the relative position between two components. For example, a position sensor 116 may include a magnetic position sensor (e.g., a Hall sensor, a tunneling magnetoresistance (TMR) sensor, a giant magnetoresistance (GMR) sensor, an anisotropic magnetoresistance (AMR) sensor) that is configured to generate an output signal that depends on a magnetic field experienced by the position sensor 116. In these instances, a first component of the head-mountable device 100 (e.g., a first support structure) may include a magnet, and a second component of the head-mountable device 100 (e.g., a second support structure) may include a magnetic position sensor that is positioned to measure a magnetic field of the magnet. As the first component is moved relative to the second component (or vice versa), an output signal generated by the magnetic position sensor will change as it moves relative to the magnetic field of the magnet. Additionally or alternatively, the one or more position sensors 116 may include one or more inductive position sensors, capacitive position sensors, optical position sensors, combinations thereof, or the like.

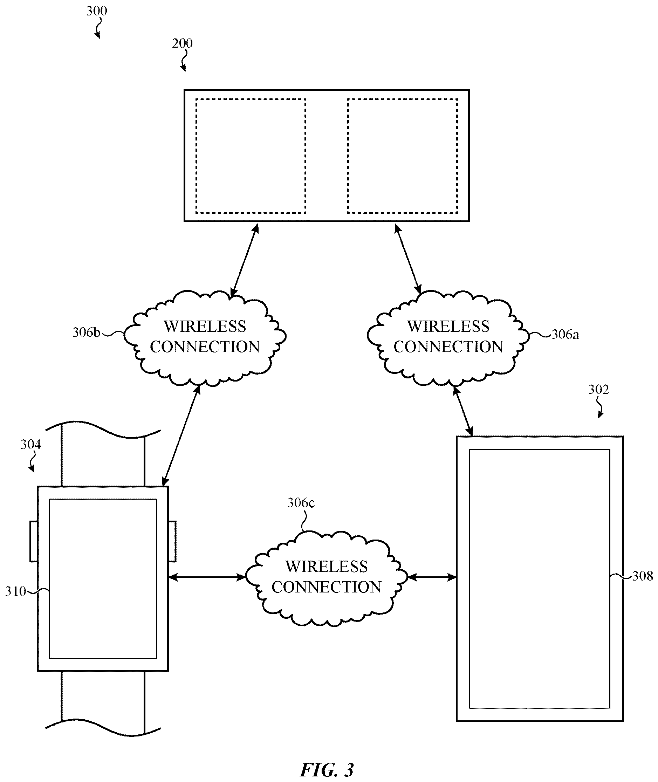

In some variations, the head-mountable device 100 may be configured to wirelessly communicate with one or more additional electronic devices, such as described herein with respect to the system 300 of FIG. 3. Accordingly, the head-mountable device 100 may include a communications unit 118 that is configured to allow the head-mountable device 100 to communicate information, such as application and operating system data, with external equipment (e.g., additional electronic devices, remote servers, or the like). For example, the communications unit 118 may be configured to allow the head-mountable device 100 to wirelessly communicate with external equipment using cellular, Bluetooth, Wi-Fi, near field communication (NFC), and/or other wireless communications techniques. The communications unit 118 may include any circuitry (e.g., transceiver circuitry) as needed to facilitate communication with external equipment.

The head-mountable device 100 may include one or more components that are configured to collect information about the environment that is present around the head-mountable device 100. For example, in some variations the head-mountable device 100 may include one or more cameras 120. Each camera may capture images of a corresponding region of the environment around the head-mountable device 100, and the head-mountable device 100 may use these images during operation of the head-mountable device 100. In some instances, the one or more cameras 120 may be configured to capture one or more images in response to receiving an image capture request. The image capture request may result from a user command or under certain predetermined conditions (e.g., a software application operating on the device may, with appropriate permissions, automatically request that a camera capture one or more images when certain criteria are met). For example, if the user wishes to capture and save an image or video using the head-mountable device 100, the user may provide a corresponding command (e.g., by interacting with a user interface on a display, pressing a designated button, giving a voice command, or the like). Upon receiving an image capture request, the head-mountable device 100 may use the one or more cameras 120 to capture a set of images, which may be used to generate a set of output images (e.g., a still image, a video, or the like) that is stored in a non-transitory computer-readable storage device (e.g., as part of the memory 104) and/or is transmitted to a different electronic device (e.g., as part of an e-mail, message, live stream or the like, or for remote storage).

Additionally or alternatively, the user may provide a command that relates to a target object present in the physical environment around the head-mountable device 100. In these instances, one or more images may be captured by the one or more cameras 120 and analyzed by the head-mountable device 100 to identify the target object. It should be appreciated that a user may provide commands to the head-mountable device 100 directly (e.g., by interacting with an input mechanism of the head-mountable device 100) or indirectly (e.g., by interacting with an input mechanism of a different electronic device, which relays the command to the head-mountable device 100).

In some instances, the head-mountable device 100 may be configured, depending on a current operating mode of the head-mountable device 100, to operate one or more cameras to capture images on an ongoing basis. Accordingly, each of these cameras may be operated to capture images according to a corresponding default frame rate when the head-mountable device 100 is not otherwise handling an image capture request. The head-mountable device 100 may, in certain operating modes, have certain active features that require information about the physical environment around the head-mountable device 100. In some instances, the head-mountable device 100 may be configured to perform a predetermined action when a corresponding set of criteria about the physical environment is met. In one non-limiting example, the head-mountable device 100 may be configured to notify a user when a certain object or type of object is identified in the physical environment around the head-mountable device 100 (e.g., the head-mountable device 100 may remind the user to fill their water bottle when the head-mountable device 100 identifies a water dispenser in images captured by the head-mountable device 100). Accordingly, as the images are captured by the one or more cameras according to their corresponding default frame rates, the head-mountable device 100 may analyze images these images to determination information about the physical environment around the head-mountable device 100. When the head-mountable device 100 receives an image capture request, the head-mountable device 100 may temporarily change the corresponding frame rates of one or more of the cameras 120. For example, the default frame rate of a given camera may be selected to help conserve power, but may be temporarily increased (at the cost of additional power consumption) when additional images are helpful for a given device function (e.g., as part of an image capture request).

In some instance, the head-mountable device 100 includes a plurality of cameras 120. In these variations, each camera has a corresponding field of view that has a corresponding size. The size of the field of view of a camera may depend at least in part on the size of its image sensor and the focal length of its lens arrangement. The head-mountable device 100 may include multiple cameras with corresponding fields of view that at least partially overlap, such that these cameras may concurrently capture images of a common portion of the physical environment around the head-mountable device 100. In some instances, different cameras may have corresponding fields of view having different sizes, such that a first camera has a corresponding first field of view that is larger than a second field of view corresponding to a second camera. In these instances, images captured by the first camera may provide information about larger portion of the physical environment, whereas images captured by the second camera may provide higher resolution information about a particular portion of the physical environment.

In some variations, the head-mountable device 100 may include one or more depth sensors 122, each of which is configured to calculate depth information for a corresponding portion of the physical environment around the head-mountable device 100 (e.g., a portion of the physical environment in font of the head-mountable device). Each depth sensor 122 may generate depth information for one or more regions of the physical environment within a corresponding field of coverage (e.g., the widest spatial extent to which that depth sensor is capable of providing depth information). In some variations in which the head-mountable device 100 includes one or more cameras 120, the field of coverage of a depth sensor 122 may at least partially overlap the field(s) of view at least one of the one or more cameras 120, thereby allowing the depth sensor to calculate depth information associated with the field(s) of view of the camera(s) 120.

The depth information may be calculated in any suitable manner, and may be used to calculate the distance between the depth sensor and various points in the environment around the head-mountable device 100. For example, a depth sensor may utilize stereo imaging, in which a pair of images are taken from different positions (e.g., from different cameras), and the distance (disparity) between corresponding pixels in the images may be used to calculate depth information. In another example, a depth sensor may utilize time-of-flight sensing, which calculates depth information based on the amount of time it takes for light (typically infrared) emitted from the depth sensor to return from the physical environment. A time-of-flight depth sensor may utilize direct time of flight or indirect time of flight, and may illuminate an entire field of coverage at one time or may only illuminate a subset of the field of coverage at a given time (e.g., via one or more spots, stripes, or other patterns that may either be fixed or may be scanned across the field of coverage). In still another example, a depth sensor may utilize structured light imaging, during which the depth sensor may image a scene while projecting a predetermined illumination pattern toward the scene, and then may analyze distortions of the pattern as it is returned from the physical environment in order to calculate depth information. Time-of-flight sensing and structure light imaging typically utilize infrared illumination, and this infrared illumination may be utilized in a range of ambient conditions without being perceived by a user.

In some instances where the head-mountable device 100 includes one or more cameras 120 and/or one or more depth sensors 122, information (e.g., images and/or depth information) captured by these components may be used to determine motion and/or the orientation information of the head-mountable device 100 (or one or more particular components thereof), for example by using simultaneous localization and mapping (SLAM) techniques. Accordingly, this information may, in some instances, be used to determine a current device state of the head-mountable device 100.

In some variations, the head-mountable device 100 may include an eye tracker 124. The eye tracker 124 may be configured to determine information about a user's eyes. For example, the eye tracker 124 may be configured to determine whether a user's eyes are present in a predetermined area relative to the head-mountable device 100 (or a particular component thereof). In some variations, the eye tracker 124 may be further configured to determine the relative positioning between the user's eyes and to the head-mountable device 100 (or a particular component thereof). Additionally or alternatively, the eye tracker 124 may be configured to determine a direction of a user's gaze. Accordingly, information from the eye tracker 124 may be used to determine a gaze location in the physical environment that represents the portion of the physical environment the user is currently looking at. Information about the user's gaze may, in some instances, be used to control operation of the head-mountable device 100. For example, the head-mountable device 100 may perform an action in response to determining that a user is looking in a particular direction and/or has moved their gaze according to predefined movement pattern.

The eye tracker 124 may include any suitable combination of hardware, software, and firmware for identifying and locating the eyes of a user. For example, the eye tracker 124 may include one or more cameras, depth sensors, combinations thereof, or the like. It should be appreciated that the eye tracker 124 may include a single unit that is configured to determine the respective positions of both of a user's eyes, or may include multiple units, each of which is configured to determine the position of a corresponding eye of the user.

The head-mountable device 100 may include one or more microphones 126, which may be used to receive voice commands from the user and/or detect audio information from the physical environment around the head-mountable device 100. In some instances, the one or more microphones 126 includes an array of microphones that may operate as a beamforming microphone. In these variations, sound captured by the array of microphones may be processed to prioritize sound coming from a particular direction. This may allow the array of microphones to emphasize a particular sound source (e.g., a user's voice) while reducing noise coming from other directions.

The head-mountable device 100 may include one or more input mechanisms that are configured to receive a manual input from a user. For example, the head-mountable device 100 may include one or more input devices 128, such as buttons, switches, rotatable knob, or the like. A user may apply a force to an input device 128 (e.g., to depressing a button, to rotate a knob) to provide an input to the head-mountable device 100. Additionally or alternatively, the head-mountable device 100 may include one or more touch sensors 130 that define one or more corresponding touch-sensitive regions of the head-mountable device 100. Specifically, a touch sensor 130 may be configured to detect user contact with its corresponding touch-sensitive region (or a sub-region thereof). A user may touch a particular portion of a touch sensor 130 and/or perform a touch gesture on the touch sensor 130 to provide an input to the head-mountable device 100. Each of the one or more touch sensors 130 may utilize any suitable touch sensing components, such as capacitive sensors, resistive sensors, piezoelectric sensors, surface acoustic wave sensors, or the like.

In some variations, the head-mountable device 100 may be configured to measure one or more physiological parameters of a user, such as heart rate, respiration rate, blood oxygenation, or the like. Accordingly, the head-mountable device 100 may include one or more physiological sensors that may be operated to measure one or more physiological parameters of a user. For example, in some variations the head-mountable device 100 may include an optical sensor 132. The optical sensor 132 may be configured as a photoplethysmography sensor that is configured to emit light at one or more wavelengths toward a skin surface of a user and collect light that is returned to the optical sensor 132 from the skin surface. The relative amount of light returned to the optical sensor may vary over time, and may be used to calculate one or more physiological parameters (e.g., heart rate, blood oxygenation, or the like). In some instances, an optical sensor 132 may additionally or alternatively be configured to measure a proximity between the optical sensor 132 and a skin surface of the user.

Additionally or alternatively, the head-mountable device 100 may include one or more biopotential sensors 134 that utilize a set of electrodes to measure one or more signals associated with electrical activity of a user's body. For example, a biopotential sensor 134 may be configured to measure an electrocardiogram (ECG), an electromyogram (EMG), an electroencephalogram (EEG), or the like. In some variations, the signal(s) measured by a biopotential sensor 134 may be analyzed to calculate a physiological parameter of a user (e.g., an ECG signal may be analyzed to determine a user's heart rate). Additionally or alternatively, the signal(s) measured by a biopotential sensor 134 may be analyzed to detect a user input (e.g., use an EMG signal to detect a particular user motion), and thus the head-mountable device 100 may perform one or more actions based on the measured signal(s). It should also be appreciated that other sensors of the head-mountable device 100 (e.g., the one or more accelerometers 110) may, in some instances, be used to measure one or more physiological parameters of a user.

In some variations, the head-mountable device 100 may include one or more output mechanisms that are configured to provide information to a user. For example, the head-mountable device 100 may include one or more audio output devices 136 that are configured to convey sound to a user (e.g., sound from voice calls, audio or video content, alerts, or the like). In some variations, the one or more audio output devices 136 include one or more speakers. In some instances, the one or more speakers may include an array of speakers that may operate as a beamsteering array of speakers. In these instances, a beamsteering array of speakers may output audio content such that individual sounds appear to come from a particular direction. Additionally or alternatively, one or more audio output devices 136 may be configured to convey sound using bone conduction. In these instances, one or more audio output devices 136 may include transducers that are configured to convert an audio signal into mechanical vibrations that are conveyed to a user's ears through the user's skull.

Additionally or alternatively, the head-mountable device 100 may include one or more haptic devices 138 that are configured to convey information to a user via controlled vibration of the head-mountable device 100 (or a portion thereof). Different information may be conveyed based on the duration and/or intensity of these vibrations. Each of the one or more haptic device 138 may utilize any suitable haptic technologies, such as linear actuators, rotating actuators, piezoelectric actuators, or the like.

Additionally or alternatively, the head-mountable device 100 may include one or more displays 140. In variations, in which the head-mountable device 100 includes one or more displays 140, the head-mountable device 100 may include a single display or multiple displays (e.g., one display for each eye of a user). Each display may be opaque or transparent, and may utilize any suitable display technology (e.g., a light emitting diode (LED) display, an organic light emitting diode (OLED) display, a liquid-crystal display (LCD), a holographic display, a waveguide display, or the like).

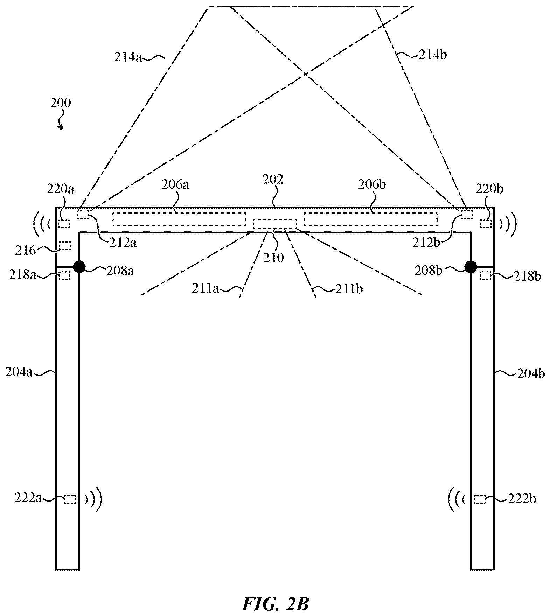

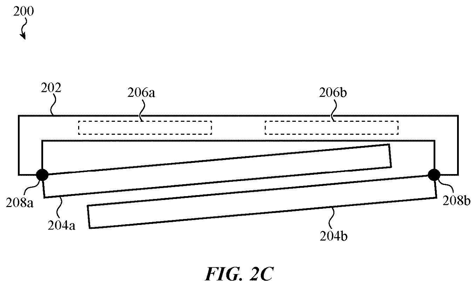

In general, the head-mountable devices described herein include a head-mounted support structure that is configured to house the various components of the head-mountable device. The head-mountable support structure may allow the head-mountable device to be worn on a head of a user as part of one or more body-worn device states. In some instances, the head-mounted support structure is formed from a set of support structures that facilitate the head-mountable device to be worn by a user. For example, a head-mountable support structure may be configured as a pair of eyeglasses or as goggles. FIG. 2A shows a front view and FIGS. 2B and 2C show top views, respectively, of a variation of a head-mountable device 200 that is configured as a pair of eyeglasses, and may be configured in any manner as described herein with respect to the head-mountable device 100 of FIG. 1. Specifically, the head-mountable device 200 includes a set of support structures that includes a frame 202 and a set of temples 204a-204b connected to the frame 202. The head-mountable device 200 may be worn, in one device state, such that the frame 202 is positioned in front of a user's face and the set of temples 204a-204b may rest on portions of the user's ears (e.g., a first temple 204a may rest on one ear of the user and a second temple 204b may rest on another ear of the user).

The frame 202 may have any suitable shape as may be desired to facilitate being worn on the head of the user. For example, the frame 202 may include a nose bridge, a set of nose pads, and/or other features that are configured to rest on a user's nose. In some variations, the frame 202 may carry one or more lenses, such as a pair of lenses 206a-206b as shown in FIGS. 2A-2C. For example, each lens may be positioned in a corresponding lens opening of the frame. The frame 202 may position the pair of lenses 206a-206b in front of the user's eyes (e.g., a first lens 206a positioned in front of a first eye of the user and a second lens 206b positioned in front of a second eye of the user), such that the user may view a portion of their surrounding environment through the pair of lenses 206a-206b. In some variations, one or more of the lenses 206a-206b may configured as corrective lenses (e.g., configured with optical power to provide vision correction based on a user's optical prescription). In some variations in which the head-mountable device 200 includes one or more displays (e.g., the one or more displays 140 of the head-mountable device 100 of FIG. 1), each display may be incorporated into or otherwise supported by a corresponding lens of the pair of lenses 206a-206b.

In some variations the frame 202 and set of temples 204a-204b are formed as a monolithic component, such the frame 202 and set of temples 204a-204b have fixed relative positions. In other variations, one or more temples of the set of temples 204a-204b are moveable relative to the frame 202. In some of these variations, each temple of the set of temples 204a-204b is moveable connected to the frame 202 via a set of hinges 208a-208b. Specifically, the first temple 204a is moveably connected to the frame 202 via a first hinge 208a, such that the first temple 204a may pivot relative to the frame 202. Similarly, the second temple 204b is moveably connected to the frame 202 via a second hinge 208b, such that the second temple 204b may pivot relative to the frame 202. In these variations, the set of temples 204a-204b may be moved relative to the frame 202 to change the head-mountable device 200 between a plurality of device configurations.

For example, FIG. 2B shows the head-mountable device 200 in a first device configuration (referred to herein as an "open configuration") in which each of the temples 204a-204b extend away from the frame 202 at a corresponding first angle. The head-mountable device 200 may be intended to be worn on a user's head in the open configuration. The first temple 204a and the second temple 204b may be folded toward the frame 202 (e.g., by pivoting the temples 204a-204b around their corresponding hinges 208a-208b) to place the head-mountable device 200 in a second device configuration (referred to herein as a "folded configuration") in which each of the temples 204a-204b extend away from the frame 202 at a correspond second angle smaller than the first angle. When placed in folded configuration, the head-mountable device 200 may occupy a smaller overall footprint, which may facilitate placing the head-mountable device 200 inside of a case, a pocket, or the like. It should be appreciated that the head-mountable device 200 may be moved between one or more additional device configurations, such as a partially folded configuration in which only one of the temples 204a-204b is folded toward the frame 202.

The support structures of the head-mountable device 200 may house the various electronic components of the head-mountable device 200, such as those described herein with respect to the head-mountable device 100 of FIG. 1. When the head-mountable device 200 is configured as a pair of eyeglasses as shown in FIGS. 2A-2C, it should be appreciated that these components may be distributed between the frame 202 and temples 204a-204b in any suitable manner as may be desired. For example, FIG. 2B shows one example arrangement of components that may be incorporated into the head-mountable device 200, though it should be appreciated that a head-mountable device as described herein may only include a subset of the components shown in FIG. 2B, may include additional components now shown in FIG. 2B, and/or may include a different arrangement of components (e.g., distributed differently between the frame 202 and the temples 204a-204b).

For example, the head-mountable device 200 is shown in FIG. 2B as including an eye tracker 210 that is positioned to detect the presence and/or location of a user's eyes behind the frame 202. For example, the eye tracker 210 may be configured to determine the presence and/or location of a first eye positioned in a first region 211a behind the first lens 206a and the presence and/or location of a second eye positioned in a second region 211b behind the second lens 206b. Accordingly, information from the eye tracker 210 may be used to determine whether the head-mountable device 200 is being worn in a particular body-worn device state in which the user's eyes are in a positioned behind the frame 202.

The head-mountable device 200 is also shown in FIG. 2B as including a set of cameras 212a-212b. In the variation shown in FIG. 2B, the set of cameras 212a-212b include a first camera 212a and a second camera 212b, each of which is positioned to image a portion of an environment in front of the frame 202. The first camera 212a is shown in FIG. 2B as having a first field of view 214a that is larger than and partially overlaps with a corresponding second field of view 214b of the second camera 212b. In other variations, the first and second fields of view 214a, 214b may have a common size, and in some instances may at least partially overlap so that the first camera 212a and the second camera 212b may concurrently image a common portion of the environment in front of the frame 202.

Also shown in FIG. 2B is an inertial measurement unit 216 that is positioned in the frame 202, and is configured to detect movement and/or the orientation of the frame 202 (and thereby movement and/or the orientation of the head-mountable device 200). Additionally or alternatively, an inertial measurement unit (and/or one or more individual sensors such as accelerometers, gyroscopes, magnetometers, or the like) may be incorporated into one or both of the temples 204a-204b, which may be configured to detect movement and/or the orientation of one or both of the temples 204a-204b. Additionally or alternatively, the head-mountable device 200 may include a set of position sensors that are configured to determine a relative position or orientation between the frame 202 and the temples 204a-204b. For example, in the variation shown in FIG. 2, the head-mountable device 200 includes a first position sensor 218a that is configured to determine a relative position or orientation between the frame 202 and the first temple 204a, and a second position sensor 218b that is configured to determine a relative position or orientation between the frame 202 and the second temple 204b.

The head-mountable device 200 may further include a set of microphones. In the variation shown in FIG. 2B, the set of microphones includes an array of microphones 220a-220b that includes at least a first microphone 220a and a second microphone 220b. While the array of microphones 220a-220b is shown as being housed entirely by the frame 202, it should be appreciated that some or all of the microphones of the array may be distributed between one or both of the temples 204a-204b.

Also shown in FIG. 2B is a plurality of speakers 222a-222b. Specifically, the plurality of speakers 222a-222b may include a first set of speakers 222a (e.g., that includes a single speaker or an array of speakers) that is housed by the first temple 204a and a second set of speakers 222b (e.g., that includes a single speaker or an array of speakers) that is housed by the second temple 204b. In these instances, when the head-mountable device 200 is worn on a user's head, the first set of speakers 222a may be operated to convey sound to a first ear of a user and the second set of speakers 222b may be operated to convey sound to a second ear of a user.

In some variations, a head-mountable device as described herein may operate as part of system that includes multiple electronic devices. For example, FIG. 3 shows a system 300 that includes the head-mountable device 200 of FIGS. 2A-2C as well as one or more additional electronic devices. For example, in the variation shown in FIG. 3, the one or more additional electronic devices includes a smartphone 302 and a smartwatch 304. The head-mountable device 200 may be configured to wirelessly communicate with one or more of the additional electronic devices via set of wireless connections 306a-306c. For example, the head-mountable device 200 may establish a first wireless connection 306a with the smartphone 302 (e.g., using corresponding communications units of the head-mountable device 200 and the smartphone 302), which may be used to transmit information between the head-mountable device 200 and the smartphone 302. Similarly, the head-mountable device 200 may establish a second wireless connection 306b with the smartwatch 304 (e.g., using corresponding communications units of the head-mountable device 200 and the smartwatch 304), which may be used to transmit information between the head-mountable device 200 and the smartwatch 304. In some instances, the head-mountable device 200 may receive information from the smartphone 302 via the smartwatch 304 (e.g., via the second wireless connection 306b and a third wireless connection 306c between the smartphone 302 and the smartwatch 304) and/or may receive information from the smartwatch 304 via the smartphone 302 (e.g., via the first wireless connection 306a and the third wireless connection 306c).

When the head-mountable device 200 is included as part of the system 300, multiple devices of the system may collectively perform one or more operations. For example, a user may provide a command to the head-mountable device 200 (e.g., a voice command), and the smartphone 302 may present information to the user (e.g., via a display 308 of the smartphone 302) in response to the head-mountable device 200 receiving the command. This may, for example, allow for visual information to be presented to a user in instances where the head-mountable device 200 does not include a display or instances in which the visual information is not easily viewed on a display of the head-mountable device 200.

In one example, the system 300 may coordinate the delivery of notifications to a user. Specifically, the system 300 may, at any given moment in time, deliver a notification to a user according to a current system notification setting. The current system notification setting controls, for a given notification, which electronic devices of the system 300 will generate an alert, as well as the type or types of alerts that are generated by each electronic device. The current system notification settings may be selected based on a number of factors, such as the type of notification, the operating state of certain components of the electronic devices of the system 300, user preferences, how the user is currently interacting with the electronic devices of the system 300, or the like. The system 300 may include a hierarchy that is used to determine a current system notification setting of the system 300.

For example, the system 300 may be configured to provide a notification to a user when an electronic device of the system 300 receives a text message. Depending on the current system notification setting, one or more of the electronic devices of the system 300 may generate an alert. For example, under certain circumstances the system 300 may utilize a first system notification setting in which the head-mountable device 200 will generate an alert (e.g., an audio alert via the plurality of speakers 222a-222b) when the system receives a text message. If, however, a user is actively looking at the display 308 of the smartphone 302 when the text message is received, the system 300 may utilize a different system notification setting. For example, the system 300 may utilize a second system notification setting in which the notification is presented to the user via the display 308 of the smartphone 302, but the head-mountable device 200 does not generate an alert. In another example, the system 300 may instead utilize a third system notification setting in which the notification is presented to user via the display 308 of the smartphone 302 and the head-mountable device 200 generates a different type of alert (e.g., an audio alert under the first system notification setting and a haptic alert under the third system notification setting). Accordingly, the system 300 may coordinate the delivery of notifications under a wide range of situations.

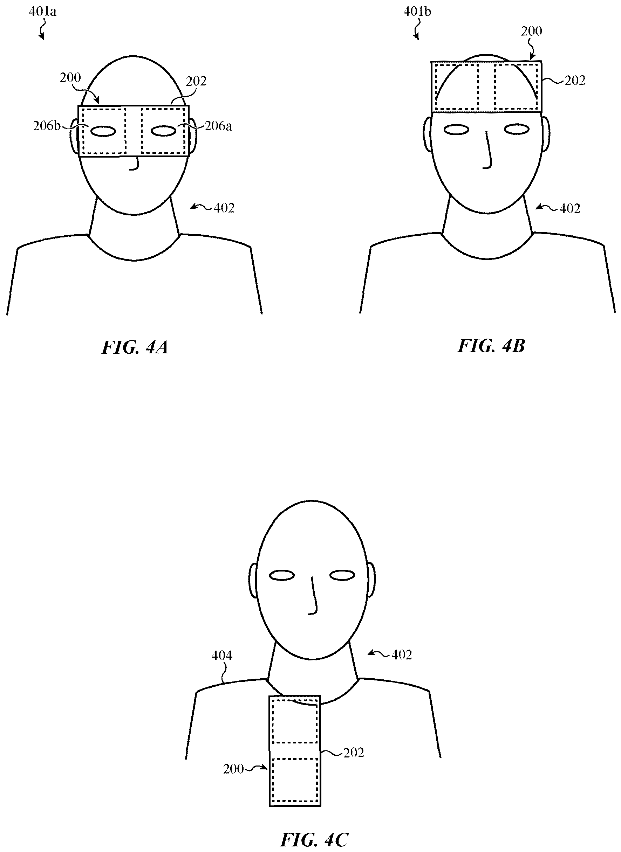

While the head-mountable devices may be intended to be worn in a particular body-mounted state, the head-mountable device may also be worn in one or more additional body-mounted states. Accordingly, the head-mountable devices described may operate differently in each of these body-mounted states, and may change a current operating mode as the head-mountable device changes between different body-mounted states. Using the head-mountable device 200 of FIGS. 2A-2C as an example, FIGS. 4A-4C depict different scenes 400a-400c depicting examples of different body-mounted states in which the head-mountable device 200 may be worn by a user 402. Specifically, FIG. 4A depicts a first scene 400a in which the head-mountable device 200 is worn by the user 402 in a first body-mounted state, also referred to herein as a "face-mounted state", in which the head-mountable device 200 is positioned at least partially in front of the user's eyes. When the head-mountable device 200 is positioned in the face-mounted state, the frame 202 may be positioned in front of a user's face such that each of the lenses 206a-206b is positioned in front a corresponding eye of the user. When the head-mountable device 200 is worn in the face-mounted state, a portion of the frame 202 (e.g., a nose bridge and/or one or more nose pads) may rest on a portion of the nose of the user 402, and each of the temples 204a-204b may rest on a corresponding ear of the user 402. The face-mounted state may be intended as the primary body-mounted state of the head-mountable device 200.

FIG. 4B depicts another scene 400b in which the head-mountable device 200 is worn by the user 402 in a second body-mounted state, also referred to herein as a "forehead-mounted" state, in which the frame 202 is supported on a forehead of the user 402. When the head-mountable device 200 is worn in a forehead-mounted state, the frame 202 (and thereby the lenses 206a-206b) is positioned entirely above the user's eyes such that the head-mountable device 200 is not positioned between the user's eyes and the surrounding environment. In some instances, the frame 202 may be positioned sufficiently above the eyes such that the user is unable to look through the lenses 206a-206b. In some instances, each of the temples 204a-204b may rest on a corresponding ear of the user 402 while the head-mountable device 200 is in the forehead-mounted state, such that the frame 202 is angled upward relative to the user's face.

FIG. 4C depicts still another scene 400c in which the head-mountable device 200 is worn by the user 402 in a third body-mounted state, also referred to herein as a "torso-mounted" state, in which the head-mountable device 200 is suspended from an article of clothing worn by the user 402. Specifically, the head-mountable device 200 may be placed in a folded configuration, such as described herein with respect to FIG. 2C, and is positioned such that a portion of the user's clothing is positioned between the frame 202 and one of the temples (e.g., the first temple 204a or the second temple 204b). In this way, the user's clothing may hold the head-mountable device 200 in front of a portion of the user's torso. While shown in FIG. 4C as being suspended from the collar of a shirt 404 that is worn by the user 402, the head-mountable device 200 may alternatively be suspended from a pocket of a shirt, from a necklace, or another article of clothing or accessory that is worn by the user. Whereas the frame 202 may be positioned with a horizontal orientation (e.g., with the lenses 206a-206b positioned along a horizontal axis) when the head-mountable device 200 is worn in a face-mounted state or a forehead-mounted state, the frame 202 may be positioned with a vertical orientation (e.g., with the lenses 206a-206b positioned along a vertical axis) when the head-mountable device 200 is worn in a torso-mounted state.

The head-mountable devices described herein may be configured to operate in a plurality of different operating modes, each of which corresponds to a different device state of the head-mountable device. Specifically, at any given moment in time, the head-mountable device may operate according to a current operating mode. The current operating mode of a head-mountable device defines the settings that are actively being used to control the behavior of the head-mountable device. For example, the current operating mode may define a set of available features and functions that may be performed by the head-mountable device. The current operating mode may specify the default behavior of the head-mountable device when the user is not actively engaging with the head-mountable device, as well as the features of the head-mountable that are available to the user (e.g., by providing a corresponding command to the head-mountable device).

Accordingly, certain device features and/or functions may be available while the head-mountable device is operating in a first operating mode, but the same features and/or functions may be unavailable when the head-mountable device is operating in a second operating mode. For example, the head-mountable device may be configured, when operating in the first operating mode, to periodically measure a user's heart rate as part of its default behavior. While operating in a second operating mode, the head-mountable device may not measure the user's heart rate as part of its default behavior. This may, for example, occur when the second operating mode is associated with a device state for which heart rate measurements may not be performed (e.g., a corresponding sensor is no longer positioned to obtain a usable measurement signal), in which case heart rate sensing may also be unavailable to the user as an on-demand measurement. In other instances, the second operating mode may correspond to a device state in which power savings is prioritized, in which case heart rate sensing may not be active as a default behavior but may be available to the user as an on-demand measurement.

Additionally, the current operating mode may define one or more parameters of an available feature or function. Using heart rate sensing as an example, the head-mountable device may be configured to perform heart rate sensing in multiple different operating modes, but may utilize different algorithms to determine heart rate from underlying sensor signals (e.g., sensor signals obtained by an accelerometer and/or an optical sensor). The current operating mode may also set the operational parameters of the various components of the head-mountable device. For example, in instances where a head-mountable device includes a camera, the current operating mode may set a default frame rate of the camera. The default frame rate of the camera may be reduced (or the camera may be disabled) in certain operating modes to conserve power.

The head-mountable device may change the current operating mode as the head-mountable device changes between different device states. Specifically, the head-mountable device may include a plurality of different operating modes corresponding to a plurality of candidate device states. The plurality of candidate device states includes at least a plurality of body-mounted device states. Accordingly, if the head-mountable device is worn in one of these body-mounted device states, the head-mountable device will operate in a current operating mode that corresponds to that body-mounted device state.

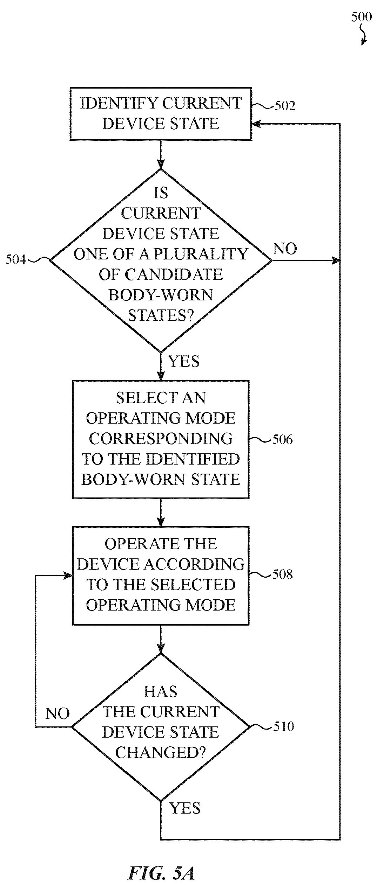

For example, FIGS. 5A-5C shows variation of processes of selecting a current operating mode of a head-mountable device, such as those described herein. The operations performed as part of these processes may be performed as a method, or may be stored as instructions on a non-transitory computer-readable storage device. When stored as instructions a non-transitory computer-readable storage device, these instructions may, when executed by one or more processors, cause the one or more processer to perform the various operations of these processes. Similarly, the head-mountable devices described in here may include a memory (e.g., memory 104) and one or more processors (e.g., processing circuitry 102) operatively coupled to the memory, such that the one or more processors are configured to execute instructions that cause the one or more processors to perform the operations of these processes.

For example, FIG. 5A shows a first variation of a process 500 of selecting a current operating mode of a head-mountable device, in which the current operating mode is selected based on a current device state. At step 502, the head-mountable device (which may be configured in any manner as described herein) may identify a current device state of the head-mountable device. The head-mountable device may select the current device state from a plurality of candidate device states, each of which is associated with a different operating mode of the head-mountable device. The plurality of candidate device states includes at least a plurality of candidate body-worn states.

The plurality of candidate body-worn states may include a face-mounted state at least one additional body-worn state. For example, the plurality of candidate body-worn states may include a forehead-mounted state, such as described herein with respect to FIG. 4B. Additionally or alternatively, the plurality of candidate body-worn states may include a torso-mounted state, such as described herein with respect to FIG. 4C. Process 500 will be discussed herein with respect to an example of a plurality of body-wom states that includes a face-mounted state, a forehead-mounted state, and a torso-mounted state, but it should be appreciated that the principles of process 500 may be applied to a plurality of candidate body-worn states that includes a different number and/or selection of candidate body-worn states.

The head-mountable device may identify the current device state in any suitable manner. In some variations, the head-mountable device may determine an orientation of the head-mountable device, and may use the determined orientation of the head-mountable device in identifying the current device state. Using the head-mountable device 200 of FIGS. 2A-2C as an example, a determination that the frame 202 has a vertical orientation may indicate that the head-mountable device 200 is more likely to be in the torso-mounted state, whereas a determination the frame 202 has a horizontal orientation may indicate that the head-mountable device 200 is more likely to be in the face-mounted state or the forehead-mounted state. Similarly, a determination that the frame 202 is tilted upward may indicate that the head-mountable device 200 is more likely to be in the forehead-mounted state. It should be appreciated that the orientation of the head-mountable device may be determined using any suitable components, such as those described herein. For example, the orientation of the head-mountable device may be used with information generated from an inertial measurement unit, one or more cameras, and/or one or more depths sensors.

Additionally or alternatively, the head-mountable device may determine a current device configuration of the head-mountable device, and may use the determined current device configuration in identifying the current device state. Using the head-mountable device 200 of FIGS. 2A-2C as an example, a determination that the head-mountable device 200 is in a folded configuration may indicate the head-mountable device is unlikely to be in the face-mounted state or the forehead-mounted state. Similarly, a determination that the head-mountable device 200 is an open configuration may indicate that the head-mountable device is unlikely to be in the torso-mounted state.

In some instances, the head-mountable device may utilize information from an eye tracker in identifying the current device state. For example, if the eye tracker detects that a user's eyes are present in a predetermined area relative to the head-mountable device, this may indicate that the head-mountable device is in the face-mounted state. Conversely, if the eye tracker is unable to detect the presence of the user's eyes, this may indicate that the head-mountable device is not in a face-mounted state. Depending on the configuration of the eye tracker, information from the eye tracker may further indicate whether the head-mountable device is currently in the forehead-mounted state (e.g., by detecting the presence of hair or skin present behind a portion of the head-mountable device) or in the torso-mounted state (e.g., by detecting the presence of fabric behind a portion of the head-mountable device).

Additionally or alternatively, the head-mountable device may utilize motion information of the head-mountable device (e.g., such as generated by an inertial measurement unit or from images captured by a set of cameras) in identifying the current device state. For example, if the head-mountable device does not detect any movement of the head-mountable device, this may indicate that the head-mountable device is not currently in a body-worn state. Conversely, different body-worn states may be associated with different motion characteristics (e.g., a head-mountable device may be more likely to experience larger and/or more frequent rotational movements in a head-mounted state such as the face-mounted state or the forehead-mounted state as compared to the torso-mounted state).

It should be appreciated that the head-mountable device may utilize multiple criteria in determining that the head-mountable device is currently in a particular device state. In one non-limiting example, in order to identify that the head-mountable device is currently in a face-mounted state, the head-mountable device may require determinations that i) the head-mountable device is in an open configuration and ii) that a user's eyes are detected using an eye tracker. In another non-limiting example, in order to identify that the head-mountable device is currently in a torso-mounted state, the head-mountable may require determinations that that i) the head-mountable device is in a closed configuration and ii) the head-mountable device (or a portion thereof) is positioned with a vertical orientation. Each candidate device state may be associated with a corresponding set of selection criteria that is used to identify that candidate device state as the current device state.

At step 504, the head-mountable device may determine whether the current device state is one of the plurality of candidate body-worn states. In response to determining that the current device state is a body-worn state of the candidate body-worn states, the head-mountable device may select, at step 506, an operating mode corresponding to the body-worn state as a current operating mode. For example, the head-mountable device may determine that the current device state is a first body-worn state of the candidate body-worn states, and the head-mountable device selects a first operating mode corresponding to the first body-worn state as the current operating mode.

At step 508, the head-mountable device operates according to the selected operating mode. In these instances, the selected operating mode may act as the current operating mode as long as the head-mountable device remains in the same body-worn state. For example, at step 510, the head-mountable device may determine whether the current device state has changed. If the head-mountable device determines that the head-mountable device is still in the current device state, the head-mountable device may continue to operate according to the selected operating mode. If the head-mountable device determines that the head-mountable device is no longer in the previously identified device state, the process may return to step 502 and the head-mountable device may update the current device state.

For example, if the head-mountable device determines that the current device state has changed to an additional body-worn state of the candidate body-worn states, the head-mountable device may change the current operating mode to a different operating mode corresponding to the new body-worn state. For example, the head-mountable device may determine that the current device state has changed to a second body-worn state, and may select a second operating mode that corresponds to the second body-worn state. The head-mountable device may operate according to the second operating mode until the head-mountable device determines that the head-mountable device is no longer in the second body-worn state.

In some variations, the plurality of candidate device states may include one or more additional device states. For example, the plurality of candidate device states may include one or more device states that correspond to the head-mountable device being placed on a surface. In some of these instances, a candidate device state may depend on the type of surface, the orientation of the head-mountable device on the surface, and/or the configuration of the head-mountable device when it is placed on the surface. In one non-limiting example, a head-mountable device may include a candidate device state (with a corresponding operating mode) that requires that the user position the head-mountable device in a particular device configuration (e.g., a partially-folded configuration) and place the head-mountable device on a particular type of surface (e.g., a countertop or a table).

Additionally or alternatively, the plurality of candidate device states may include a candidate device state that depends at least in part on the head-mountable device engaging an accessory device. For example, a candidate device state may require that the head-mountable device engage with (e.g., be positioned on, connected to, or the like) a particular accessory device, such as a charging device, a dock, or the like, in a predetermined manner. The head-mountable device may be configured to detect this engagement, and may use this information in selecting the current device state of the head-mountable device.

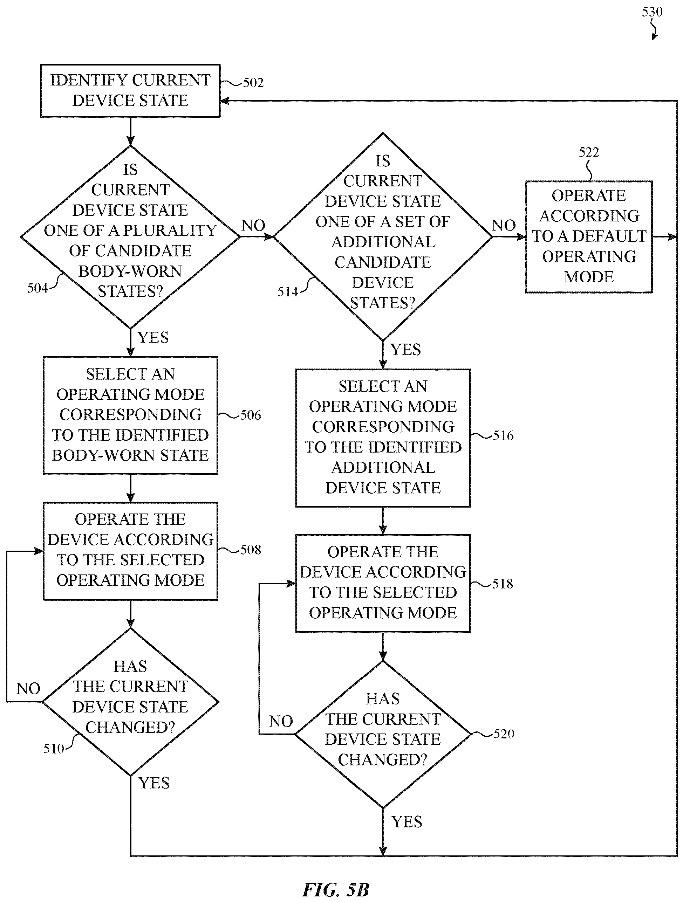

FIG. 5B shows a variation of a process 530, which may be configured and labeled the same as the process 500 of FIG. 5A except that the head-mountable device may determine that the current device state is an additional is one of a set of additional candidate devices states beyond the plurality of body-mounted device states. For example, the plurality of candidate device states may include the plurality of candidate body-worn states and a set of additional candidate device states. If the head-mountable device determines, at step 504, that the current device state is not one of the plurality of candidate body-worn states, the head-mountable device may determine whether the current device state is one of the set of additional candidate body-worn states at step 514.

In response to determining that the current device state is an additional candidate device state of the plurality of candidate states, the head-mountable device may select, at step 516, an operating mode corresponding to the additional device state as a current operating mode. At step 518, the head-mountable device operates according to the selected operating mode, and may continue operating according to the selected operating mode as long as the head-mountable device remains in the same device state. For example, at step 520, the head-mountable device may determine whether the current device state has changed. If the head-mountable device determines that the head-mountable device is still in the current device state, the head-mountable device may continue to operate according to the selected operating mode. If the head-mountable device determines that the head-mountable device is no longer in the previously identified device state, the process may return to step 502 and the head-mountable device may update the current device state.

In some instances, it may be desirable for the head-mountable device to operate according to a default operating mode. In some instances, there may be a range of situations for which the head-mountable device does not have a dedicated corresponding operating mode, and the head-mountable device may be configured to operate in the default operating mode in these situations. For example, the head-mountable device may be configured to operate according to the default operating mode when it is placed inside of a protective case or a drawer. Accordingly, in some variations the head-mountable device may be configured to operate according to a default operating mode when the head-mountable device determines that the current device state does not correspond to any of the plurality of candidate device states (e.g., the current device state does not meet the selection criteria for any of the candidate device states). For example, if the head-mountable device determines that the current device state does not correspond to any of the plurality of candidate body-worn states (e.g., at step 504), and the head-mountable device determines that the current device state does not correspond to any of the additional candidate device states (e.g., at step 514), the head-mountable device may operate according to the default operating mode at step 522.

In some variations, the default operating mode may be a standby mode that is configured to reduce power consumption of the head-mountable device. While in a standby mode, most components of the head-mountable device are powered down. The head-mountable device may be configured to periodically wake certain device components to see if the head-mountable device has changed to a different device state. Additionally or alternatively, the head-mountable device may be configured to check the current device state in response to a predefined wake signal (e.g., the detection of a threshold level of motion by an accelerometer, the detection of a particular use input). The head-mountable device may change its current operating mode if the current device state changes to one of the plurality of candidate device states within a threshold period of time, otherwise the head-mountable device may return to the standby state.

Accordingly, the head-mountable devices described herein may, during operation of the head-mountable device, continually update the current operating mode as the head-mountable device changes between device states. For example, a head-mountable device may initially determine that the current device state is a first device state of a plurality of candidate device states (e.g., that includes a plurality of candidate body-worn states and, in some variations, a set of additional candidate device states), and may select a first operating mode that corresponds to the first device state as a current operating mode. The head-mountable device may operate in the first operating mode while the head-mountable device is in the first device state. The head-mountable device may subsequently determine that the current device state has changed from the first device state to a second device state of the plurality of candidate device states, and may update the current operating mode to a second operating mode corresponding to the second device state. Similarly, the head-mountable device may determine that the current device state has changed to a third device state (e.g., from the second device state) that does not correspond to any of the plurality of the candidate device states. In these instances, the head-mountable device may update the current operating mode to a default operating mode.

When a user stops wearing a head-mountable device, they may place head-mountable device in a particular location (e.g., on a kitchen table, in a backpack). If the user forgets where they placed the head-mountable device, it may be difficult for the user to locate the head-mountable device (especially if the head-mountable device has been placed inside of another object, such as a drawer). Accordingly, it may be desirable for the head-mountable devices described here to identify contextual information about where a head-mountable device has been placed.

In some variations, the head-mountable device may be configured enter a transition operating mode in response to identifying that the current device state has changed from a body-worn state (e.g., one of the plurality of candidate body-worn states described herein). When operating in the transition operating mode (e.g., the as the current operating mode), the head-mountable device may change the operation of one or more components in an attempt to capture contextual information about where the head-mountable device is placed next. For example, the head-mountable device may increase the default frame rate of one or more cameras (or activate one or more cameras that were disabled in the previous operating mode). The head-mountable device may analyze these images to identify information where a user places the head-mountable device next, and may transmit this information to external equipment (e.g., another electronic device, such as those described with respect to the system 300 of FIG. 3). Alternatively, these images may be transmitted to another electronic device (e.g., as part of the system 300) for later analysis.

In this way, a user may be able to access information about where they left the head-mountable device. For example, information captured by the head-mountable device while in the transition operating mode may be used to identify the general state of the head-mountable device (e.g., inside of drawer) or a particular location (e.g., inside of the top dresser drawer in the user's bedroom). The user may, with appropriate user permissions, may utilize a device tracking application on another electronic device (e.g., a smartphone, smartwatch, or the like) to access this information if they are having difficulty in locating the head-mountable device.

In some instances, it may be desirable for the head-mountable device to enter a transition operating mode only when certain criteria are met. Using the head-mountable device 200 of FIG. 2 as an example, a user may temporarily lift the frame 202 of the head-mountable device 200 from a face-mounted state (e.g., to rub an eye) and may return the head-mountable device 200 to the face-mounted state without removing the head-mountable device 200 from the user's head. In other instances, a user may move the head-mountable device 200 directly from a face-mounted state to a forehead-mounted state without removing the head-mountable device 200 from the user's head. In either of these instances, the head-mountable device 200 may identify that the current device state has changed (e.g., at step 510 of processes 500 and 530), but the user has not actually removed the head-mountable device 200 from their body. It may be preferable to not enter the transition operating mode in these instances, as doing so may unnecessarily consume additional power.

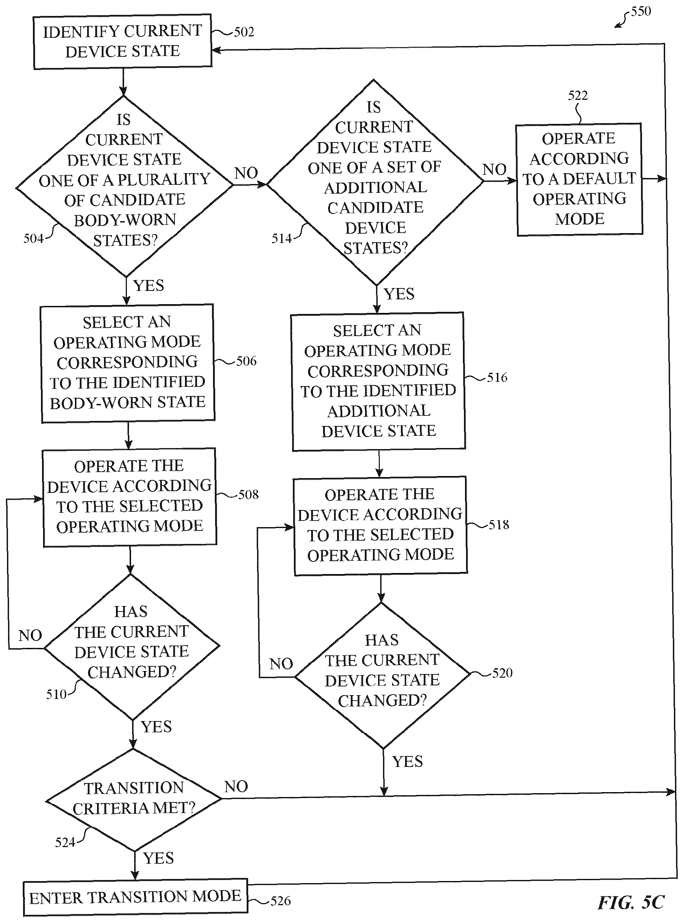

Accordingly, in some variations the head-mountable device may require that a set of criteria, also referred to herein as "transition criteria", be met before entering the transition operating mode. For example, FIG. 5C shows a variation of a process 550 as described herein. The process 550 may be configured and labeled the same as the process 530 of FIG. 5B, except that when the head-mountable device determines, at step 510, that the current device state has changed (e.g., from the previous body-worn state), the head-mountable device will determine, at step 524, whether a set of transition criteria has been met. If the set of transition criteria has not been met, the head-mountable device may return to step 502 and identify a current state of the head-mountable device without entering the transition operating mode. If the set of transition criteria has been met, the head-mountable device may operate according to the transition operating mode at step 526.

In some variations, the set of transition criteria may be selected based on the previously identified body-worn state. For example, a head-mountable device may experience different motion characteristics when a user removes the head-mountable device from a face-mounted state as compared to when the user removes the head-mountable device form a torso-mounted state. Accordingly, if the head-mountable device changes from a face-mounted state, the head-mountable device may apply a first set of transition criteria to determine whether to enter the transition operating mode. If the head-mountable device changes from a torso-mounted state, the head-mountable device may apply a different second set of transition of transition criteria to determine whether to enter the transition operating mode.

The head-mountable device may operate in the transition operating mode until one or more exit criteria have been met. In some instances, the head-mountable device may exit the transition operating mode when the head-mountable display identifies that a current device state is one of the plurality of candidate device states, at which point the head-mountable device may operate according to current operating mode that corresponds to the identified device state. If the current device state has not yet entered one of the plurality of candidate device states, the head-mountable device may be configured to exit the transition operating mode when the head-mountable device stops moving, which may indicate that the head-mountable device has been placed in a stationary location. Additionally or alternatively, the head-mountable device may be configured to exit the transition operating mode after a threshold amount of time. In these instances, the head-mountable device may change the current operating mode from the transition operating mode to the default operating mode.

As described in more detail herein, the head-mountable devices may operate across a range of different operating modes, and these operating modes may differ from each other in many possible ways. For example, different candidate body-worn states may be associated with different physiological sensing functions. In some variations, a head-mountable device may be configured, when operating in an operating mode corresponding to a torso-mounted state, to use motion information measured by the head-mountable device to measure a respiration rate of a user (e.g., as a default behavior and/or as an on-demand measurement). This motion information may be measured, for example, by one or more accelerometers or inertial measurement units, and may reflect movement of a user's torso as they breathe.

In some of these variations, the head-mountable device may not measure a respiration rate when the head-mountable device is operating in operating modes corresponding to certain other body-worn states. For example, the head-mountable device may not measure (either as default behavior or in response to a user command) respiration rate when the head-mountable device is operating in an operating mode corresponding to a forehead-mounted state. Additionally or alternatively, the head-mountable device may not measure respiration rate when the head-mountable device is operating in an operating mode corresponding to a face-mounted state. In other variations, the head-mountable device may also measure a user's respiration rate when the head-mountable device is operating in an operating mode corresponding to another body-worn state. For example, the head-mountable device, when operating in an operating mode corresponding to a face-mounted state, may utilize different combinations of sensors (e.g., optical sensors, microphones, or the like) and/or different algorithms to measure a respiration rate.

Additionally or alternatively, a head-mountable device may be configured, when operating in an operating mode corresponding to a torso-mounted state, to use motion information measured by the head-mountable device to measure a heart of a user. For example, the motion information may capture vibrations that occur in the user's torso as their heart beats. Similarly, in some variations the head-mountable device may not measure a user's heart rate when the head-mountable device is operating in operating modes corresponding to certain other body-worn states. For example, the head-mountable device may not measure a user's heart rate when the head-mountable device is operating in an operating mode corresponding to a forehead-mounted state. Additionally or alternatively, the head-mountable device may not measure a user's heart rate when the head-mountable device is operating in an operating mode corresponding to a face-mounted state. In other instances, the head-mountable device may utilize different sensors and/or algorithms to measure a user's heart rate in a different operating mode. For example, in instances where the head-mountable device includes an optical sensor, the head-mountable device may be configured to measure a user's heart rate using the optical sensor (e.g., using photoplethysmography analysis techniques).

In variations in which the head-mountable device includes one or more cameras, one or more operating parameters of these cameras may change between different operating modes. For example, different operating modes of the head-mountable device may be associated with different default frame rates for a given camera. For example, a camera of a head-mountable device may be operated according to a first default frame rate when the head-mountable device is operating in an operating mode corresponding to a first body-mounted state (e.g., a face-mounted state). The camera may be operated according to a lower second default frame rate when the head-mountable device is operating in an operating mode correspond to a second body-mounted state (e.g., a forehead-mounted state). In some examples, operating states corresponding to a face-mounted state and a forehead-mounted state may be associated with different default frame rates of the camera (e.g., camera may operate with a lower default frame rate in the forehead-mounted states). In some variations, operating states corresponding to a face-mounted state and a torso-mounted may be associated with a common default frame rate of the camera. In other variations, operating states corresponding to a face-mounted state and a torso-mounted may be associated with different default frame rates of the camera.

In some variations, a given camera of the head-mountable device may be deactivated in certain operating modes. Using the head-mountable device 200 of FIGS. 2A-2C as an example, the second camera 212b may, when the head-mountable device 200 is operating in an operating mode corresponding to a face-mounted state, be operable to capture images (e.g., according to a corresponding default frame rate and/or in response to image capture requests). Conversely, the second camera 212b may be deactivated when the head-mountable device 200 is operating in operating modes corresponding to certain other body-worn states. For example, the second camera 212b may be deactivated when the head-mountable device 200 is operating in an operating mode correspond to a torso-mounted state. Additionally or alternatively, the second camera 212b may be deactivated when the head-mountable device 200 is operating in an operating mode correspond to a forehead-mounted state. When the second camera 212b is deactivated, any functions that require images captured by second camera 212b may similarly be unavailable in these operating modes. It should be appreciated that, depending on the operating mode, the first camera 212a may or may not be deactivated.

In variations in which a head-mountable device includes an array of microphones, the head-mountable device may use different audio processing techniques in different operating modes corresponding to different body-worn states. Using the head-mountable device 200 of FIGS. 2A-2C as an example, the head-mountable device 200 may utilize different beamforming algorithms in analyzing sounds captured by the array of microphones 220a-220b. For example, when the head-mountable device 200 is operating in an operating mode corresponding to a face-mounted state, the head-mountable device 200 may utilize a first beamforming algorithm to detect a voice command in an audio signal captured by the array of microphones 220a-220b. Conversely, when the head-mountable device 200 is operating in an operating mode corresponding to a forehead-mounted state, the head-mountable device 200 may utilize a different second beamforming algorithm to detect a voice command in the audio signal captured by the array of microphones 220a-220b. Because the array of microphones 220a-220b will be positioned at different positions relative to the user's mouth, the first and second beamforming algorithms may be selected to account for these different positions. Similarly, in instances where a head-mountable device includes one or more speakers, the head-mountable device may output audio differently in different operating modes. For example, different beamsteering techniques may be used to account for different distances and/or relative position between the a given speaker (or array of speakers) and a user's ears. In some instances, a given piece of audio, when generated by the head-mountable device while operating in an operating mode corresponding to a face-mounted state, may be generated using a first beamsteering technique. The same piece of audio, when generated by the head-mountable device while operating in an operating mode corresponding to a forehead-mounted state, may be generated using a second beamsteering technique.

In some variations, the head-mountable device may be configured to change one or more notification settings between different operating modes. For example, the head-mountable device may, depending on the current operating mode, generate different alert types for a given type of notification. In one such example, for a given type of notification, the head-mountable device may be configured to generate a speech-based audio alert when the head-mountable device is operating in an operating mode corresponding to a first body-mounted state. For the same type of notification, the head-mountable device may be configured to generate a non-speech audio alert (e.g., a beep, chirp, chime, or the like) when the head-mountable device is operating in an operating mode corresponding to a second body-mounted state. Using a text message notification as an example, it may be desirable in some instances, such as when the device is worn in a face-mounted or a fore-head mounted state, to synthesize the text message to in an audio output such that the user may hear the content of the text message without needing to look at a display (e.g., a display of the head-mountable device or a display of another electronic device). When the head-mountable device is worn in a torso-mounted state, it may not be desirable to play the text message as an audio output. In these instances, in order for a user to be able to understand the speech, the head-mountable device may need to play the audio output with sufficient volume such that other nearby people may also here the content of the text message.

Accordingly, in some variations, the head-mountable device may generate a speech-based audio alert when a text message is received while the head-mountable device is operating in a face-mounted state. For example, the content of the text message may be converted to speech using a speech synthesizer and played to use (e.g., using one or more speakers). Conversely, the head-mountable device may generate a non-speech audio alert when a text message is received while the head-mountable device is operating in a torso-mounted state. The non-speech audio alert may bring the user's attention to the presence of the notification, but may not otherwise convey the content of the text message. In order for the user to access the content of the texts message, the user may move the head-mountable device to a different body-worn state (e.g., the face-mounted state) within a threshold amount of time after the head-mountable device generates the non-speech audio alert. In these instances, the head-mountable device may be configured to synthesize the text to audio upon detecting that the user has moved the head-mountable device to the new body-worn state. Additionally or alternatively, the user may view the text message on a display of a device (e.g., a display of the head-mountable device or a display of another electronic device) after receiving the notification.

In instances where a head-mountable device is used as part of a system, the head-mountable device may update a system notification setting associated the system as the head-mountable device is changed between body-worn states. Using the system 300 of FIG. 3 as an example, the system 300 may utilize one or more system notification settings that prioritize generating alerts using the head-mountable device 200 when the head-mountable device is operating in an operating mode corresponding to a face-mounted state (e.g., using audio alerts generated using the speakers 222a-222b of the head-mountable device 200). Conversely, when the head-mountable device 200 is operating in an operating mode corresponding to a torso-mounted state, the system 300 may utilize one or more system notification settings that prioritize generating alerts using other electronic devices of the system 300 (e.g., via the smartphone 302 and/or the smartwatch 304).

In variations where the head-mountable device includes an eye tracker, the eye tracker may be operated differently in different operating modes. For example, when a head-mountable device is operating in an operating mode corresponding to a first body-mounted state (e.g., a face-mounted state), the eye tracker may be operated according to a first operating mode. For example, the eye tracker may be configured, in the first operating mode, to detect a position and/or location of the user's eyes at a first detection rate. When the head-mountable device is operating in an operating mode corresponding to a second body-mounted state (e.g., a forehead-mounted state), the eye tracker may be operated according to a second operating mode. For example, the eye tracker may be configured, in the second operating mode, to detect a position and/or location of the user's eyes at a second detection rate that is less than the first detection rate. In other words, the eye tracker may detect the position and/or location of the user's eyes less frequently when operating in the second operating mode. In this way, when the head-mountable device is in a forehead-mounted state, the head-mountable device may occasionally check to see if the user's eyes are present, which may indicate that the head-mountable device has moved to a face-mounted state.

As described above, one aspect of the present technology is measuring physiological parameters of a user. The present disclosure contemplates that in some instances this gathered data may include personal information data that uniquely identifies or can be used to contact or locate a specific person. Such personal information data can include demographic data, location-based data, telephone numbers, email addresses, Twitter IDs (or other social media aliases or handles), home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to provide haptic or audiovisual outputs that are tailored to the user. Further, other uses for personal information data that benefit the user are also contemplated by the present disclosure. For instance, health and fitness data may be used to provide insights into a user's general wellness or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining the privacy and security of personal information data. Such policies should be easily accessible by users and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and revised to adhere to applicable laws and standards, including jurisdiction-specific considerations. For instance, in the US, collection of or access to certain health data may be governed by federal and/or state laws, such as the Health Insurance Portability and Accountability Act ("HIPAA"); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of determining spatial parameters, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, haptic outputs may be provided based on non-personal information data or a bare minimum amount of personal information, such as events or states at the device associated with a user, other non-personal information, or publicly available information.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of the specific embodiments described herein are presented for purposes of illustration and description. They are not targeted to be exhaustive or to limit the embodiments to the precise forms disclosed. It will be apparent to one of ordinary skill in the art that many modifications and variations are possible in view of the above teachings.

### FURTHER NUMBERED STATEMENTS

1. A method of operating a head-mountable device, comprising:
   identifying a current device state of the head-mountable device;
   selecting, in response to identifying that the current device state is a body-worn state of a plurality of candidate body-worn states, an operating mode corresponding to the body-worn state as a current operating mode; and
   operating the head-mountable device according to the current operating mode.
2. The method of statement 1, wherein the plurality of candidate body-worn states comprises a face-mounted state.
3. The method of statement 2, wherein the plurality of candidate body-worn states comprises a forehead-mounted state.
4. The method of statement 2 or statement 3, wherein the plurality of candidate body-worn states comprises a torso-mounted state.
5. The method of any of statements 1-4, wherein identifying the current device state of the head-mountable device comprises determining an orientation of the head-mountable device.
6. The method of any of statements 1-5, wherein identifying the current device state of the head-mountable device comprises determining a current device configuration of the head-mountable device.
7. The method of any of statements 1-6, comprising:
   determining that the current device state of the head-mountable device has changed from the body-worn state to an additional body-worn state of the plurality of candidate body-worn states;
   changing the current operating mode to a different operating mode corresponding to the additional body-worn state.
8. The method of any of statements 1-6 comprising:
   determining that the current device state of the head-mountable device has changed from the body-worn state; and
   changing the current operating mode to a transition operating mode.
9. The method of statement 8, wherein changing the current operating mode to the transition operating mode comprises:
   changing the current operating mode to the transition operating mode in response to determining that a set of transition criteria has been met.
10. The method of statement 9, wherein the set of transition criteria is selected based on the body-worn state.
11. A non-transitory computer-readable medium comprising instructions, which when executed by one or more processors, cause the one or more processer to perform operations comprising the steps of any of statements 1-10.
12. A system, comprising:
   a head-mountable device comprising:
   a head-mountable support structure; and
   one or more processors operatively coupled to a memory, wherein the one or more processors are configured to execute instructions causing the one or more processors to:
      identify a current device state of the head-mountable device;
      select, in response to identifying that the current device state is a body-worn state of a plurality of candidate body-worn states, an operating mode corresponding to the body-worn state as a current operating mode; and
      operate the head-mountable device according to the current operating mode.
13. The system of statement 12, wherein the plurality of candidate body-worn states comprises a face-mounted state.
14. The system of statement 13, wherein the plurality of candidate body-worn states comprises a forehead-mounted state.
15. The system of statement 13 or statement 14, wherein the plurality of candidate body-worn states comprises a torso-mounted state.
16. The system of any of statements 12-15, wherein the one or more processors are configured to execute instructions causing the one or more processors to identify the current device state of the head-mountable device using an orientation of the head-mountable device.
17. The system of any of statements 12-16, the one or more processors are configured to execute instructions causing the one or more processors to identify the current device state of the head-mountable device using a current device configuration of the head-mountable device.
18. The system of any of statements 12-17, wherein:
   the head-mountable device comprises an eye tracker; and
   the one or more processors are configured to execute instructions causing the one or more processors to identify the current device state of the head-mountable device using information from the eye tracker.
19. The system of any of statements 12-18, wherein the one or more processors are configured to execute instructions causing the one or more processors to:
   determine that the current device state of the head-mountable device has changed from the body-worn state to an additional body-worn state of the plurality of candidate body-worn states; and
   change the current operating mode to a different operating mode corresponding to the additional body-worn state.
20. The system of any of statements 12-18, wherein the one or more processors are configured to execute instructions causing the one or more processors to:
   determine that the current device state of the head-mountable device has changed from the body-worn state; and
   change the current operating mode to a transition operating mode.
21. The system of any of statements 12-18, wherein the head-mountable support structure comprises:
   a frame;
   a set of temples connected to the frame.
22. A method of operating a head-mountable device, comprising:
   identifying a current device state of the head-mountable device;
   determining that the current device state is a first device state of a plurality of candidate device states, wherein the plurality of candidate device states comprises a plurality of candidate body-worn device states;
   selecting a first operating mode as a current operating mode, wherein the first operating mode corresponds to the first device state;
   determining that the current device state has changed from the first device state to a second device state of the plurality of candidate device states; and
   updating the current operating mode to a second operating mode that corresponds to the second device state.
23. The method of statement 22, wherein the plurality of candidate body-worn states comprises a face-mounted state.
24. The method of statement 23, wherein the plurality of candidate body-worn states comprises a forehead-mounted state.
25. The method of statement 23 or statement 24, wherein the plurality of candidate body-worn states comprises a torso-mounted state.
26. The method of any of statements 22-25, wherein the plurality of candidate device states comprises a set of additional candidate device states.
27. The method of any of statements 22-26, comprising:
   determining that the current device state has changed from the second device state to a third device state that does not correspond any of the plurality of candidate device states; and
   updating the current operating mode to a default operating mode.
28. The method of any of statements 22-27, wherein identifying the current device state of the head-mountable device comprises determining an orientation of the head-mountable device.
29. The method of any of statements 22-28, wherein identifying the current device state of the head-mountable device comprises determining a current device configuration of the head-mountable device.
30. A non-transitory computer-readable medium comprising instructions, which when executed by one or more processors, cause the one or more processer to perform operations comprising the steps of any of statements 22-29.
31. A system, comprising:
   a head-mountable device comprising:
   a head-mountable support structure; and
   one or more processors operatively coupled to a memory, wherein the one or more processors are configured to execute instructions causing the one or more processors to:
      identify a current device state of the head-mountable device;
      determine that the current device state is a first device state of a plurality of candidate device states, wherein the plurality of candidate device states comprises a plurality of candidate body-worn device states;
      select a first operating mode as a current operating mode, wherein the first operating mode corresponds to the first device state;
      determine that the current device state has changed from the first device state to a second device state of the plurality of candidate device states; and
      update the current operating mode to a second operating mode that corresponds to the second device state.
32. The system of statement 31, wherein the plurality of candidate body-worn states comprises a face-mounted state.
33. The system of statement 32, wherein the plurality of candidate body-worn states comprises a forehead-mounted state.
34. The system of statement 32 or statement 33, wherein the plurality of candidate body-worn states comprises a torso-mounted state.
35. The system of any of statements 31-34, wherein the plurality of candidate device states comprises a set of additional candidate device states.
36. The system of any of statements 31-35, wherein the one or more processors are configured to execute instructions causing the one or more processors to:
   determine that the current device state has changed from the second device state to a third device state that does not correspond any of the plurality of candidate device states; and
   update the current operating mode to a default operating mode.
37. The system of any of statements 31-36, wherein the one or more processors are configured to execute instructions causing the one or more processors to identify the current device state of the head-mountable device using an orientation of the head-mountable device.
38. The system of any of statements 31-37, the one or more processors are configured to execute instructions causing the one or more processors to identify the current device state of the head-mountable device using a current device configuration of the head-mountable device.
39. The system of any of statements 31-38, wherein:
   the head-mountable device comprises an eye tracker; and
   the one or more processors are configured to execute instructions causing the one or more processors to identify the current device state of the head-mountable device using information from the eye tracker.
40. The system of any of statements 31-39, wherein the head-mountable support structure comprises: a frame; a set of temples connected to the frame.

## Claims

1. A method of operating a head-mountable device, comprising:
identifying a current device state of the head-mountable device;
selecting, in response to identifying that the current device state is a body-worn state of a plurality of candidate body-worn states, an operating mode corresponding to the body-worn state as a current operating mode; and
operating the head-mountable device according to the current operating mode.

2. The method of claim 1, wherein the plurality of candidate body-worn states comprises a face-mounted state.

3. The method of claim 2, wherein the plurality of candidate body-worn states comprises a forehead-mounted state.

4. The method of claim 2 or claim 3, wherein the plurality of candidate body-worn states comprises a torso-mounted state.

5. The method of any of claims 1-4, wherein identifying the current device state of the head-mountable device comprises determining an orientation of the head-mountable device.

6. The method of any of claims 1-5, wherein identifying the current device state of the head-mountable device comprises determining a current device configuration of the head-mountable device.

7. The method of any of claims 1-6, comprising:
determining that the current device state of the head-mountable device has changed from the body-worn state to an additional body-worn state of the plurality of candidate body-worn states;
changing the current operating mode to a different operating mode corresponding to the additional body-worn state.

8. The method of any of claims 1-6 comprising:
determining that the current device state of the head-mountable device has changed from the body-worn state; and
changing the current operating mode to a transition operating mode.

9. The method of claim 8, wherein changing the current operating mode to the transition operating mode comprises:
changing the current operating mode to the transition operating mode in response to determining that a set of transition criteria has been met.

10. The method of claim 9, wherein the set of transition criteria is selected based on the body-worn state.

11. A non-transitory computer-readable medium comprising instructions, which when executed by one or more processors, cause the one or more processer to perform operations comprising the steps of any of claims 1-10.

12. A system, comprising:
a head-mountable device comprising:
a head-mountable support structure; and
one or more processors operatively coupled to a memory, wherein the one or more processors are configured to execute instructions causing the one or more processors to:
identify a current device state of the head-mountable device;
select, in response to identifying that the current device state is a body-worn state of a plurality of candidate body-worn states, an operating mode corresponding to the body-worn state as a current operating mode; and
operate the head-mountable device according to the current operating mode.

13. The system of claim 12, wherein the plurality of candidate body-worn states comprises a face-mounted state.

14. The system of claim 13, wherein the plurality of candidate body-worn states comprises a forehead-mounted state.

15. The system of claim 13 or claim 14, wherein the plurality of candidate body-worn states comprises a torso-mounted state.
